# EUROPEAN PATENT APPLICATION

(11) **EP 4 497 483 A1**
(43) Date of publication of application: **29.01.2025**
(21) Application number: 22933250.7
(22) Date of filing: 22.03.2022
(51) Int. Cl.: A63F 13/55, A63F 13/80

(54) **DECK CONSTRUCTION SYSTEM, DECK CONSTRUCTION METHOD, AND DECK CONSTRUCTION PROGRAM**

(71) Applicant: Heroz, Inc., Tokyo 108-0014 (JP)
(72) Inventor: HUJIMOTO, Keisuke, Tokyo 108-0014 (JP); KAWASHIMA, Kei, Tokyo 108-0014 (JP); KIYOTA, Hidekazu, Tokyo 108-0014 (JP)
(74) Representative: MERH-IP Matias Erny Reichl Hoffmann Patentanwälte PartG mbB
(86) International application number: PCT/JP2022/013054
(87) International publication number: WO 2023/181100

(57) **Abstract**

Provided is a deck construction system 200 that performs deck construction of a card game according to a designated condition so as to assist deck construction of a player or to assist adjustment of game balance by a developer. A deck construction unit system 200 includes a match simulation unit 231 that simulates a match between a deck including a card used in the card game and a test deck determined in advance, a statistical information creation unit 232 that creates a statistical information of a card based on a result of the match performed by the match simulation unit, an input reception unit 233 that receives a condition that the construction target deck including the card used in the card game is to satisfy, and a deck construction unit 234 that replaces a card included in the construction target deck based on the statistical information created by the statistical information creation unit so as to satisfy the condition received by the input reception unit.

## Description

### [Technical Field]

The present invention relates to a deck construction system, a deck construction method, and a deck construction program for having a computer construct a deck automatically in a match-type digital card game.

### [Background Art]

Recently, a number of digital card games in which a card game match is performed on a computer have been developed. Rules for playing such digital card games are basically the same as conventional card games, except that the digital card games do not have real cards, but instead, all the cards being owned, and the matches, are managed on the computer.

In a match-type card game, excluding a portion of games having special rules, a deck construction process exists before the match. Deck construction refers to a selection by a player of a number of cards determined, based on a rule, from among the cards owned by the player, and declaration of the cards as a set of cards that is used in the next match.

Usually, deck construction is performed by the players themselves, and even though some players find this process to be more enjoyable than the match itself, there is a demand for a system that performs deck construction automatically by a computer, such as for players who wish to enjoy the match itself using a given deck, for use as a support of deck construction for a beginner player who is not familiar with the game, or for the purpose of adjusting balance of the game by a game developer.

Heretofore, studies regarding the attempt to perform deck construction of digital card games by a computer have been disclosed.

### [Citation List]

### [Non-Patent Literature]

[NPL 1] Garcia-Sanchez, P. et al., "Evolutionary deckbuilding in hearthstone", [online], September 2016, Computational Intelligence in Games, [Searched January 13, 2022], the Internet <URL: https://www.researchgate.net/publication/304246423_Evolutionary_Deckbuilding_in _HearthStone>
[NPL 2] Garcia-Sanchez, P. et al., "Automated Playtesting in Collectible Card Games using Evolutionary Algorithms: a Case Study in HearthStone", [online], April 2018, Knowledge-Based Systems, [Searched January 13, 2022], the Internet <URL: https://www.researchgate.net/publication/324767888_Automated_Playtesting_in_Co llectible_Card_Games_using_Evolutionary_Algorithms_a_Case_Study_in_HearthSt one>
[NPL 3] Sverre Johann Bjorke, et al., "Deckbuilding in Magic: The Gathering Using a Genetic Algorithm", [online], June 2017, Norwegian University of Science and Technology, [Searched January 13, 2022], the Internet <URL: https://ntnuopen.ntnu.no/ntnu-xmlui/bitstream/handle/11250/2462429/16274_FULLTEXT.pdf>

### [Summary of Invention]

### [Problem to be Solved by the Invention]

All the studies mentioned above relate to an attempt of automatically building a deck of a digital card game on a computer, but none of them have reached a state of practical use. Further, although they are each based on a genetic algorithm (hereinafter referred to as GA), they remain to the use of a simple algorithm, such as replacing of cards being performed randomly.

Further, in a case where an automatic deck construction system is required, the deck being built cannot be constructed freely, and since the conditions of the deck required by the player or the developer depend on cases and objects, in many cases, a system capable of automatically constructing a deck that corresponds to various conditions designated by the user in a computer is required.

Further, a card game involves a combination of cards that exerts synergistic effects (synergy) when being combined together in a deck, but according to the method in which cards are replaced randomly, the probability of having such a combination of cards assembled in a deck by coincidence is reduced as the number of cards constituting the synergy increases and as the category of cards that exist in the game increases. Based on such circumstances, according to the conventional methods, the probability of having a deck constructed in which many cards constitute a synergy was extremely small.

In connection with the difficulty of constructing a deck including synergies, it was also a conventional problem to enable diversity of the deck being built to be ensured. In a case where a plurality of different decks are to be built, it is difficult to intentionally build a number of decks having different meanings from the viewpoint of deck concept (having a different synergy as a main subject) while lacking any information related to which combination of cards constitute synergy.

Moreover, in a card game, it is common custom to have new cards added and issued periodically, but it is necessary to determine in advance whether the newly added cards do not deteriorate the balance of the game. Normally, a method of having test players including the developers themselves perform test play for a number of times is often taken. However, the building of decks used for such tests requires much time and manpower, and in addition thereto, the test decks being used must be created by those having much knowledge regarding the abilities and effects of the cards, and that there was a risk of overlooking an unexpected powerful combo or the like.

Further, many card games involve various tactics and playstyles, and it may be possible that a card that is assumed to be used for an ordinary tactic may prove to be unexpectedly powerful when used for a different tactic. This problem is also difficult to discover in advance based on a test performed by a small number of test players, and since special tactics may require a large number of cards to be fulfilled, it was not possible based on the conventional algorithm to expect the creation of a deck that corresponds to a unique playstyle.

The object of the present invention is to perform a deck construction according to designated conditions, and to thereby assist deck construction of players or assist adjustment of game balance by developers, wherein the details thereof are as follows.

To construct a deck that corresponds to conditions designated by a player of a card game.

To allow deck construction that corresponds to various conditions, since the conditions designated by a player may vary according to the status and object of the game.

To allow deck construction that constitutes a combination of cards, if any, that exerts a synergistic effect by being assembled in a deck simultaneously.

To allow a plurality of decks having meaningful differences as deck concepts to be constructed.

To allow deck construction that corresponds to various tactics and playstyles.

### [Means to Solve the Problem]

In order to solve the problems mentioned above, a deck construction system for performing a deck construction of a card game is provided, wherein the deck construction system includes a match simulation unit configured to simulate a match between a deck including a card used in the card game and a test deck determined in advance, a statistical information creation unit configured to create a statistical information of a card based on a result of the match performed by the match simulation unit, an input reception unit configured to receive a condition to be satisfied by a construction target deck including the card used in the card game, and a deck construction unit configured to replace a card included in the construction target deck based on the statistical information created by the statistical information creation unit so as to satisfy the condition received by the input reception unit.

According to the above system, it becomes possible to provide a deck construction system for building a deck that matches conditions designated by a player of a card game by replacing cards included in a deck to be constructed based on a statistical information such that a received condition is satisfied.

### [Effects of Invention]

As described above, the present invention enables to provide a deck construction system, a deck construction method, and a deck construction program that performs deck construction according to designated conditions and to assist deck construction of players or assist adjustment of game balance by the developer.

### [Brief Description of Drawings]

FIG. 1 is a view illustrating a computer system for carrying out an embodiment of a present invention.
FIG. 2 is a view illustrating one example of a configuration of a deck construction system according to the embodiment of the present invention.
FIG. 3 is a view illustrating one example of a functional block of a deck construction device according to the embodiment of the present invention.
FIG. 4 is a view illustrating an example of a screen of a deck construction condition designation page received by the deck construction device according to the embodiment of the present invention.
FIG. 5 is an example of a flowchart for tabulating statistical information according to the embodiment of the present invention.
FIG. 6 is an example of a basic flowchart of a deck construction algorithm according to the embodiment of the present invention.
FIG. 7 is an example of a flowchart of a deck construction algorithm in a case where an island model is used according to the embodiment of the present invention.
FIG. 8 is a view illustrating a list of cards constituting a card game A according to the embodiment of the present invention.
FIG. 9 is a view illustrating rules of the card game A according to the embodiment of the present invention.
FIG. 10 is a view illustrating one example of statistical information (statistics of a card by itself) of the card game A according to the embodiment of the present invention.
FIG. 11 is a view illustrating one example of statistical information (a part of statics of a card pair) of the card game A according to the embodiment of the present invention.

### [Description of Embodiments]

In the following description, an embodiment according to the present invention will be described with reference to the drawings.

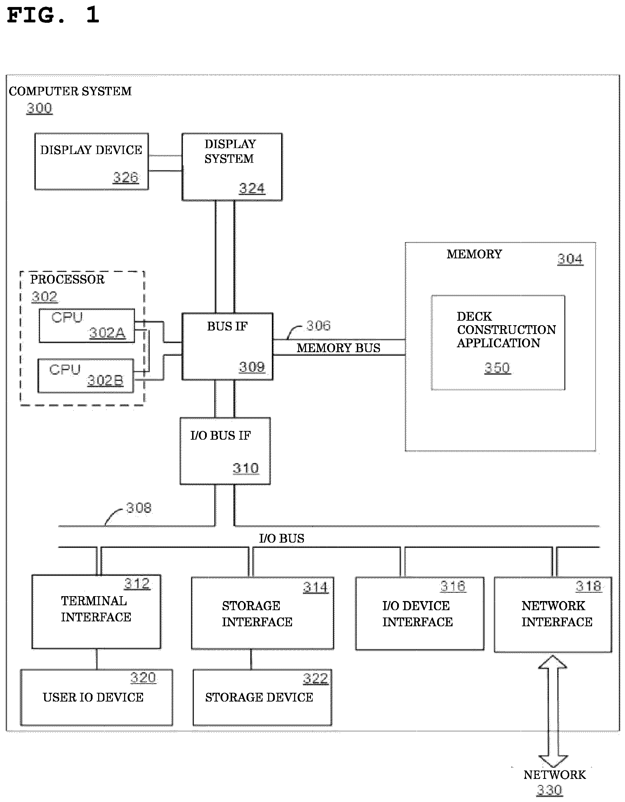

At first, with reference to FIG. 1, a computer system 300 for carrying out an embodiment according to the present disclosure will be described. Mechanisms and devices of various embodiments disclosed in the present specification may be applied to an arbitrary appropriate computing system. Major components of the computer system 300 include one or more processors 302, a memory 304, a terminal interface 312, a storage interface 314, an I/O (input/output) device interface 316, and a network interface 318. These components may be mutually connected via a memory bus 306, an I/O bus 308, a bus interface unit 309, and an I/O bus interface unit 310.

The computer system 300 may include one or a plurality of general-purpose programmable central processing units (CPU) 302A and 302B that are generally referred to as the processors 302. According to one embodiment, the computer system 300 may include a plurality of processors, and according to another embodiment, the computer system 300 may be a single CPU system. The respective processors 302 may execute commands stored in the memory 304 and may include an on-board cache.

According to an embodiment, the memory 304 may include a random-access semiconductor memory, a storage device, or a storage medium (either volatile or nonvolatile) for storing data and programs. The memory 304 may store all or a part of programs, software module, and data structures for implementing the functions described in the present specification. For example, the memory 304 may store a deck construction application 350. According to a certain embodiment, the deck construction application 350 may include commands or descriptions for executing the functions described below on the processors 302.

According to an embodiment, instead of a processor-based system, or in addition to a processor-based system, the deck construction application 350 may be implemented in a hardware via a semiconductor device, a chip, a logic gate, a circuit, a circuit card, and/or other physical hardware devices. According to an embodiment, the deck construction application 350 may include data other than commands or descriptions. According to an embodiment, a camera, a sensor, or other data input devices (not shown) may be provided to communicate directly with the bus interface unit 309, the processors 302, or other hardware of the computer system 300.

The computer system 300 may include the bus interface unit 309 that performs communication among the processors 302, the memory 304, a display system 324, and the I/O bus interface unit 310. The I/O bus interface unit 310 may be connected to the I/O bus 308 for transmitting data among various I/O units. The I/O bus interface unit 310 may communicate with a plurality of I/O interface units 312, 314, 316, and 318 also known as I/O processors (IOP) or I/O adaptors (IOA) via the I/O bus 308.

The display system 324 may include a display controller, a display memory, or both. The display controller may provide video, audio, or both video and audio data to a display device 326. Further, the computer system 300 may include devices such as one or a plurality of sensors that are configured to collect data and provide the data to the processors 302. The display system 324 may be connected to the display device 326, such as an independent display screen, a television, a tablet, or a portable device.

The I/O interface unit is provided with a function to communicate with various storages or I/O devices. For example, a terminal interface unit 312 allows attachment of a user I/O device 320, such as a user output device such as a video display device or a speaker television, or a user input device such as a keyboard, a mouse, a keypad, a touchpad, a trackball, a button, a light pen, or other pointing devices. The user may enter input data and instructions to the user I/O device 320 and the computer system 300, and may receive output data from the computer system 300, by operating the user input device using the user interface. The user interface may be displayed on the display device, played on a speaker, or printed via a printer, through the user I/O device 320.

The storage interface 314 allows attachment of one or a plurality of disk drives or a direct-access storage device 322 (which is normally a magnetic disk drive storage device, but it may also be an array of disk drives or other storage devices that are constituted to be recognized as a single disk drive). According to an embodiment, the storage device 322 may be implemented as an arbitrary secondary storage device. The contents of the memory 304 may be stored in the storage device 322, and may be read from the storage device 322 according to need. The I/O device interface 316 may provide an interface to other I/O devices, such as a printer or a facsimile machine. The network interface 318 may provide a communication path for allowing the computer system 300 to communicate mutually with other devices. This communication path may be, for example, a network 330.

According to an embodiment, the computer system 300 may be a device that does not have a direct user interface and that receives requests from other computer systems (clients), such as a multiuser mainframe computer system, a single user system, or a server computer. According to another embodiment, the computer system 300 may be a desktop computer, a portable computer, a notebook PC, a tablet computer, a pocket computer, a telephone, a smartphone, or other arbitrary appropriate electronic devices.

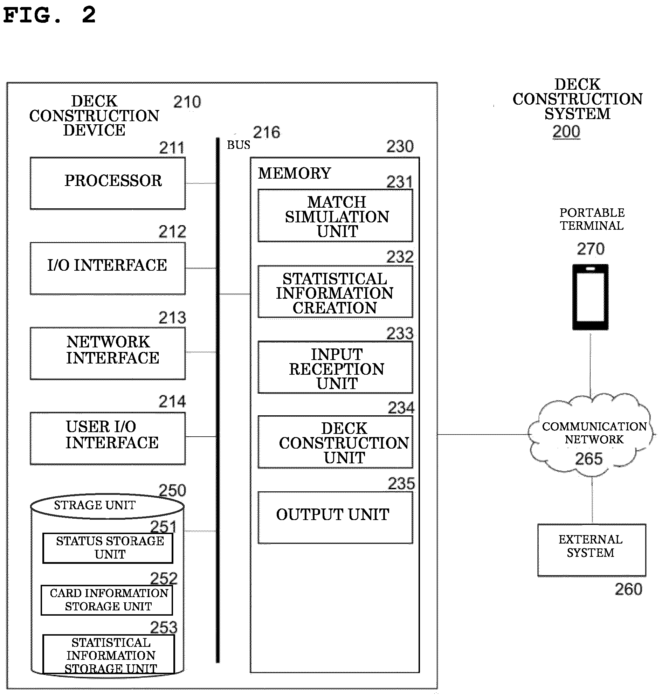

Next, a deck construction system 200 according to the present invention will be described with reference to FIG. 2. The deck construction system 200 according to the present invention includes a deck construction device 210, a portable terminal 270, and an external system 260, which are connected via a communication network 265. The communication network 265 may include, for example, a Local Area Network (LAN), a wide area network (WAN), a satellite network, a cable network, a Wi-Fi network, or an arbitrary combination thereof.

The deck construction device 210 is a computing device that executes a deck construction method for performing deck construction of a card game according to the present invention. The deck construction device 210 may be, for example, a desktop computer, a server computer, a laptop computer, a tablet computer, a workstation, a portable terminal, or other types of computing devices, which are not specifically limited according to the present invention.

The deck construction device 210 includes a processor 211 for executing commands stored in a memory 230, an I/O interface 212 for controlling communication between internal and external devices of the deck construction device 210, a network interface 213 for controlling the communication performed via the communication network 265, a user I/O interface 214 for receiving input from the user, the memory 230 storing function units for executing each of the functions of the deck construction method according to the present embodiment, and a bus 216 for controlling bidirectional communication between these components.

The memory 230 of the deck construction device 210 includes, for example, a match simulation unit 231 for simulating a match of a deck including cards used in the card game and a predetermined test deck, a statistical information creation unit 232 for creating statistical information of cards based on the result of the match performed in the match simulation unit 231, an input reception unit 233 for receiving conditions that a construction target deck including the cards used in the card game must satisfy, a deck construction unit 234 that replaces cards included in the construction target deck based on a statistical information that the statistical information creation unit 232 creates to satisfy the conditions received by the input reception unit 233, and an output unit 235 that outputs the cards included in the deck constructed by the deck construction unit 234.

Further, each of the function units included in the deck construction device 210 may be a software module that constitutes the deck construction application 350 in the computer system 300 illustrated in FIG. 1, or may be an independent dedicated hardware device. Further, the above-mentioned function unit may be implemented in the same computing environment, or in dispersed computing environments. For example, only the input reception unit 233, the deck construction unit 234, and the output unit 235 may be executed by the deck construction device 210, and the remaining match simulation unit 231 and the statistical information creation unit 232 may be executed by the external system 260 described later. Further, storage units such as a status storage unit 251, a card information storage unit 252, and a statistical information storage unit 253 are arranged on the external system 260, and are configured such that the deck construction device 210 may be accessed from a remote location.

As have been described above, the external system 260 may be arranged such that a portion of the components of the deck construction device 210 is executed thereby, or configured such that the match-type digital card game is executed thereby. The external system 260 may be a system composed, for example, of a remote personal computer, a server, a storage device, a database, a cloud-type storage, or a system composed of a combination thereof. In FIG. 2, for convenience of description, only one external system 260 is illustrated, but actually, the deck construction device 210 is connected to a large number of external systems.

The portable terminal 270 may be used as an operation terminal that accesses the deck construction device 210 and operates the deck construction device 210. Further, the portable terminal 270 may be used as an operation terminal that accesses the external system 260 in which the match simulation unit 231 or the statistical information creation unit 232, which are parts of the function unit, are executed, performs a match in advance, and creates statistical information. The portable terminal 270 may be a personal computer, a portable terminal such as a smartphone, or a tablet computer.

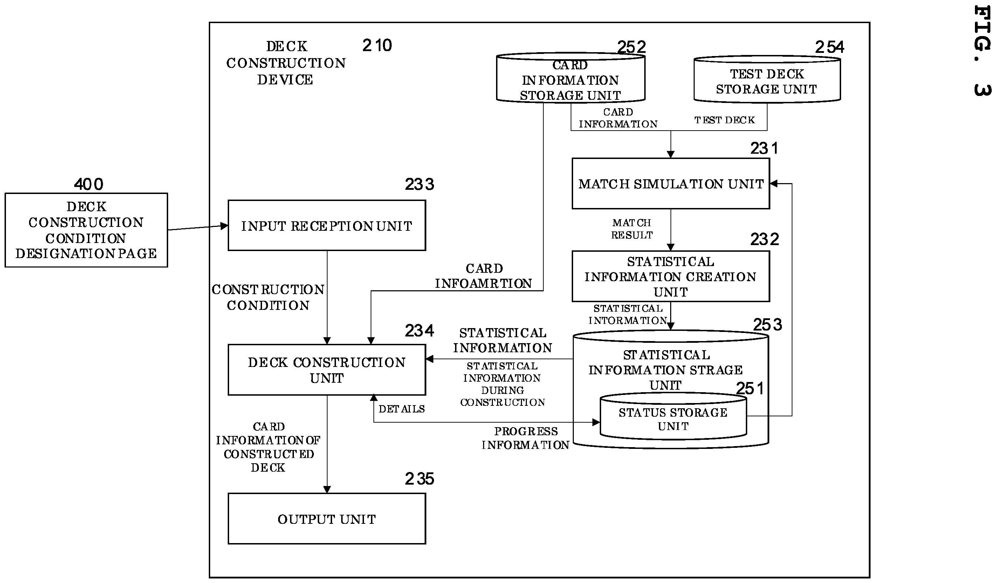

With reference to FIGs. 3 to 11, the functions of function units included in the deck construction device 210 will be described. The respective function units included in the deck construction device 210 include, as illustrated in FIG. 2, the match simulation unit 231, the statistical information creation unit 232, the input reception unit 233, the deck construction unit 234, and the output unit 235, and include, as storage units, the status storage unit 251, the card information storage unit 252, the statistical information storage unit 253, and a test deck storage unit 254. The deck construction device 210 may be applied, not only to a specified match-type card game, but also to various other card games, and merely for sake of explanation, an imaginary card game (card game A) is described as a specific example.

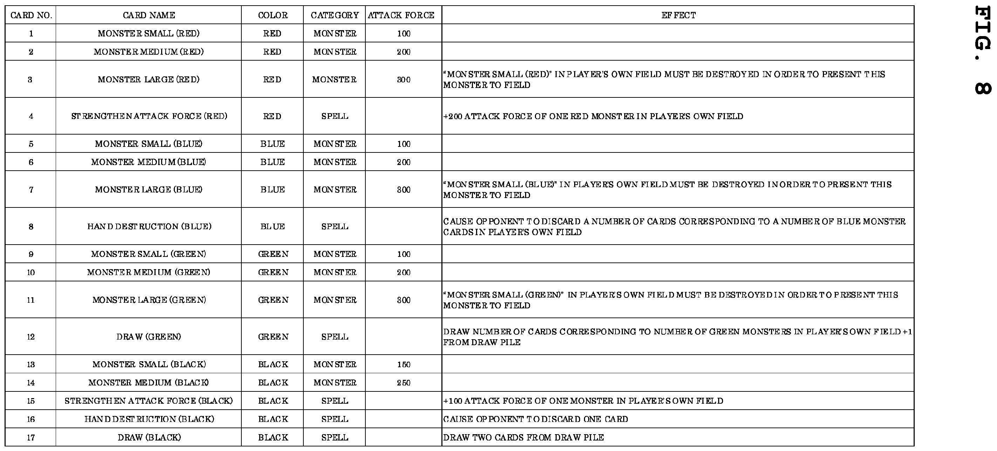

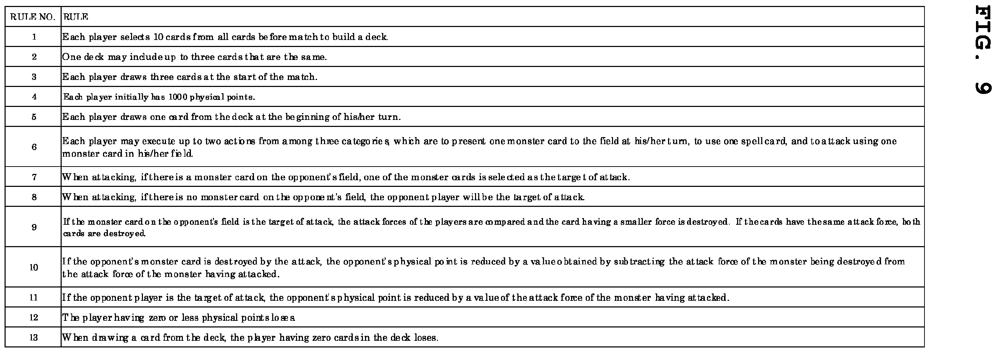

The card information storage unit 252 stores card information and game rules regarding card game A, as illustrated in FIGs. 8 and 9. Card game A is composed of cards as illustrated in FIG. 8. Obviously, the 17 cards illustrated in the drawing are only parts of the cards illustrated for sake of description. Each card has a name, and for example, the card name of card No. 1 is "monster small (red)", and the card name of card No. 4 is "strengthen attack force (red)". The respective cards are classified into categories, and for example, the category of card No. 1 is "monster", and the category of card No. 4 is "spell". The "monster" card is a card that is placed on the player's own field when used, and functions to attack an opponent player or to defend against an attack from the opponent. The "spell" card is a card that does not remain in the player's own field when used, but exerts an effect to change the state of the game, such as to change the status of a monster or to provide additional action to the player. The "monster" card includes an attack force value, wherein the attack force of card No. 1 is 100, and the attack force of card No. 3 is 300, meaning that the attack force of card No. 3 is stronger. The attack force is a parameter that indicates the ability (strength) during the match.

Further, the respective cards are classified by attribute (which according to the present example is attribute of "color"), and there are red, blue, green, and black "colors". Cards of the same color belong to the same group, and cards of different colors belong to different groups. For example, the colors of card No. 1 and card No. 4 are "red", and these cards belong to the same group, whereas the color of card No. 8 is "blue", meaning that it belongs to a different group from card No. 1. The cards belonging to the same group may have a synergistic effect (synergy).

For example, card No. 4 has an effect to "+200 the attack force of one monster having a red color on the player's own field", and its effect is exerted by being included in the same deck as card Nos. 1 to 3 having a red attribute. In contrast, this card will not exert its effect when being combined with monsters of other colors, and therefore, no synergistic effect may be exerted. Therefore, when constructing a deck, if the "spell" card of card No. 4 is in the same deck as the "monster" card having a red attribute, it is preferable that card No. 4 is determined to be retained within the deck in construction so as to exert a synergistic effect, whereas in contrast, if card No. 4 is in the same deck as a "monster" card having an attribute of another color, it is preferable that card No. 4 is determined to be removed from the deck in construction since it will not exert any synergistic effect.

Card game A has a rule as illustrated in FIG. 9. According to card game A, prior to the match, ten cards may be selected from all cards to build the deck (rule No 1), and the deck may include up to three of the same cards (rule No. 2). When the deck construction unit 234 performs deck construction, these rules must be obeyed.

The test deck storage unit 254 stores a test deck determined in advance for carrying out a match with the card game A. The test deck is created by those having knowledge of the abilities and effects of all the cards included in the card game A, and the test deck is a typically considered deck, such as a deck each having different ratios of cards having a high ability and cards having a low ability per attribute, or a deck including cards having a high ability to cause draw. There are various final methods of winning in the card game A, as illustrated in the rules of FIG. 9, such as when a physical point of the opponent player falls to 0 or lower (rule No. 12), or when the deck has no more cards when the opponent player draws a card from the deck (rule No. 13), such that the deck should not simply include as much monsters having high attack forces as possible, and it is a considerable strategy to include a hand destruction (blue) card of card No. 8 or to include a hand destruction (black) card of card No. 16, which function to have the opponent player discard his/her hand.

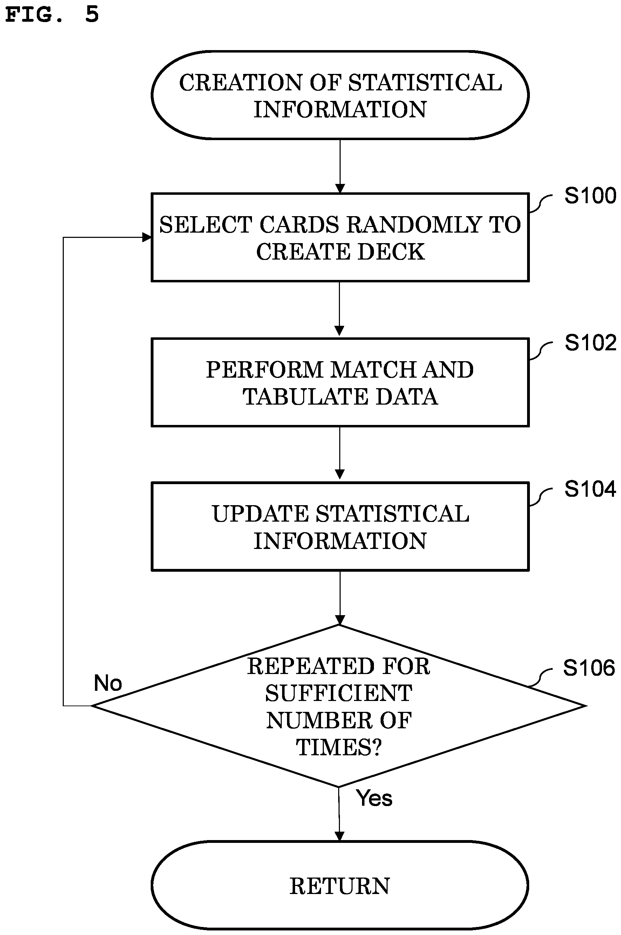

The match simulation unit 231 is executed according to the flowchart illustrated in FIG. 5. As an advance preparation of deck construction, the match simulation unit 231 refers to the cards of card game A stored in the card information storage unit 252, and selects ten cards randomly to create a deck (S100 of FIG. 5). The match simulation unit 231 refers to the test deck stored in the test deck storage unit 254, performs a simulation to carry out a match between the randomly selected deck and the test deck, and acquires information such as the outcome of the game during the match or the number of times of use of each card (S102 of FIG. 5). The match simulation unit 231 includes a learned model that has been trained in advance by a neural network, such that it may be able to handle a random deck sufficiently appropriately. That is, the match simulation unit 231 may perform a sufficiently rational selection compared to a player that acts completely randomly for his/her object, including winning the game.

The statistical information creation unit 232 creates a statistical information of a card based on the results of the match performed by the match simulation unit 231, and stores the updated statistical information in the statistical information storage unit 253 (S104 of FIG. 5). Specifically, the statistical information creation unit 232 tabulates the information acquired by the match simulation unit 231, and creates the following statistical information regarding the cards, and synergistic effect (synergy) for all the cards and sets of cards. Item a. denotes an average strength of each card, and item c. denotes an average strength of each synergy. Further, by comparing items b. and d., the magnitude of the synergistic effect (synergy) of each card may be recognized.
a. Average winning percentage of a deck in which a certain card is present
b. In a case where a certain card is present in a deck, the average times of use of the card
c. Average winning percentage of a deck in which a certain set of cards is present
d. In a case where a certain set of cards is present in a deck, the average times of use of each of the cards

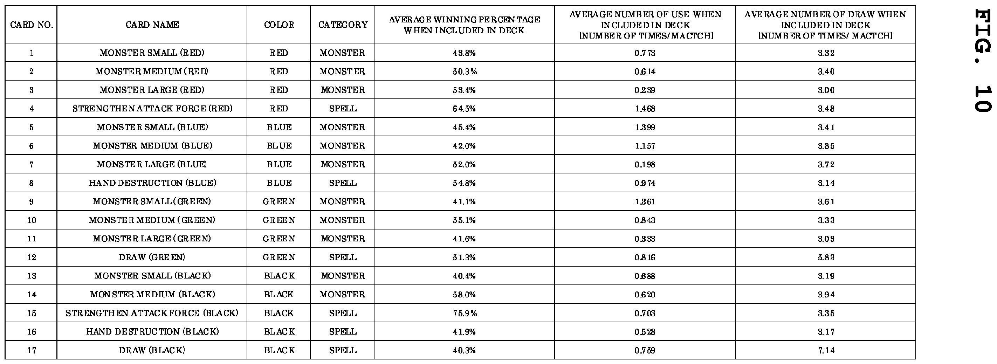

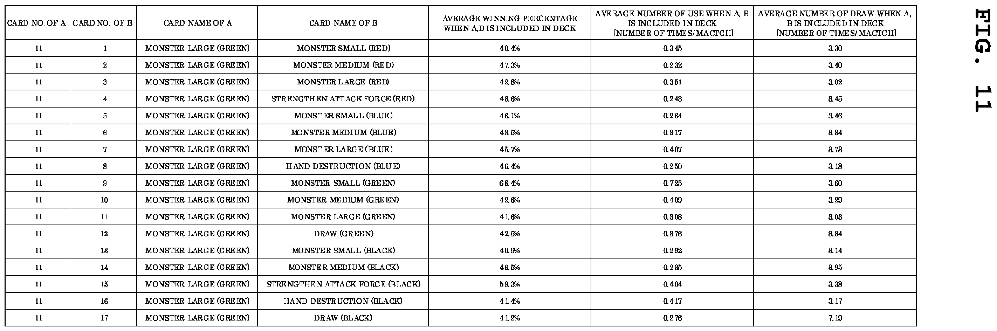

For example, FIGs. 10 and 11 illustrate an example of statistical information of card game A stored in the statistical information storage unit 253. FIG. 10 illustrates a. an average winning percentage of a deck in which a certain card is present in a deck for each card, and b. in a case where a certain card is present in a deck, the average times of use of the card, or an average number of draws in a case where the certain card is present in a deck. Further, FIG. 11 illustrates, in a case where card No. 11 "monster large (green)" is included as one card (A) and the card constitutes a set with another card (B), c. an average winning percentage of a deck in which a certain set of cards (A and B) is present, and d. in a case where a certain set of cards (A and B) is present in a deck, the average times of use of card A, and an average number of draws in a case where a certain set of cards (A and B) is present in a deck.

In FIG. 10, an average winning percentage in a case where card No. 15 "strengthen attack force (black)" is included in a deck is higher than other cards, such that it is recognized that the "strengthen attack force (black)" is a powerful card (a card that tends to contribute to the winning percentage). Further, the average usage rate of a case where card No. 11 "monster large (green)" is included in a deck is approximately 0.333 times per match, whereas according to FIG. 11, the usage rate of card No. 11 "monster large (green)" in a case where card No. 9 "monster small (green)" is included in a deck is 0.725 times per match. Based thereon, it can be recognized that by including card No. 9 "monster small (green)" in a deck, there is an effect (there is a synergy) that the usage rate of card No. 11 "monster large (green)" is raised.

The creation of statistical information by the statistical information creation unit 232 is performed at least once as advance preparation of deck construction, and there is no need to perform the same each time a deck is constructed. That is, FIG. 11 illustrates a set composed of a pair of two cards, but some synergies of cards may be exerted for a set of three or more cards, such that by limiting the information to be acquired to information of a single card and a pair of cards, the size of the statistical information and the number of matches performed when acquiring the statistics may be suppressed to a realistically executable range, and that combos realized by three or more cards may also be reproduced.

The statistical information creation unit 232 repeatedly performs the steps S100 to S104 for a sufficient number of times (S 106 of FIG. 5). Here, a sufficient number of times may be determined arbitrarily, which may be determined, in a case of updating statistical information, to a value that has been converged compared to the previous statistical information.

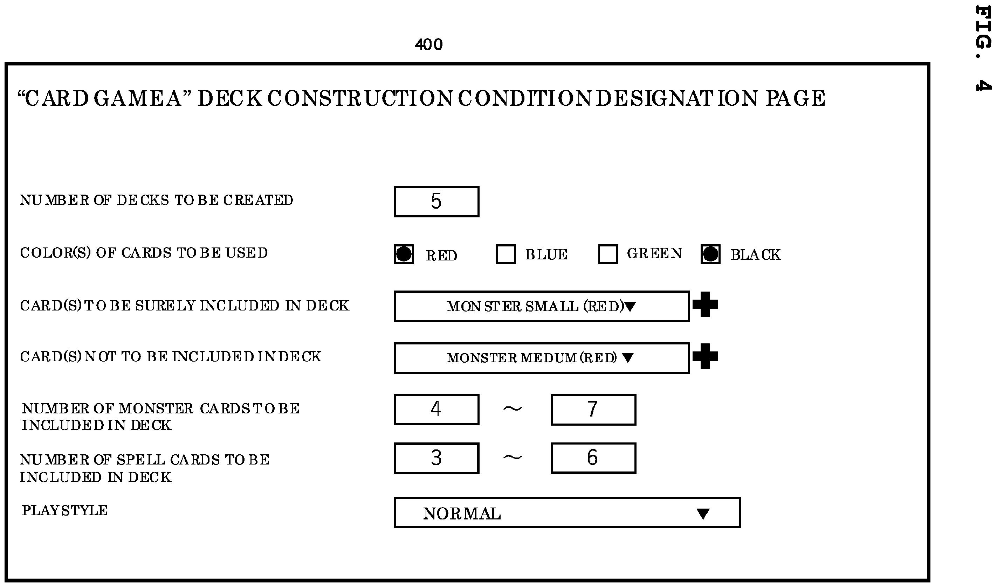

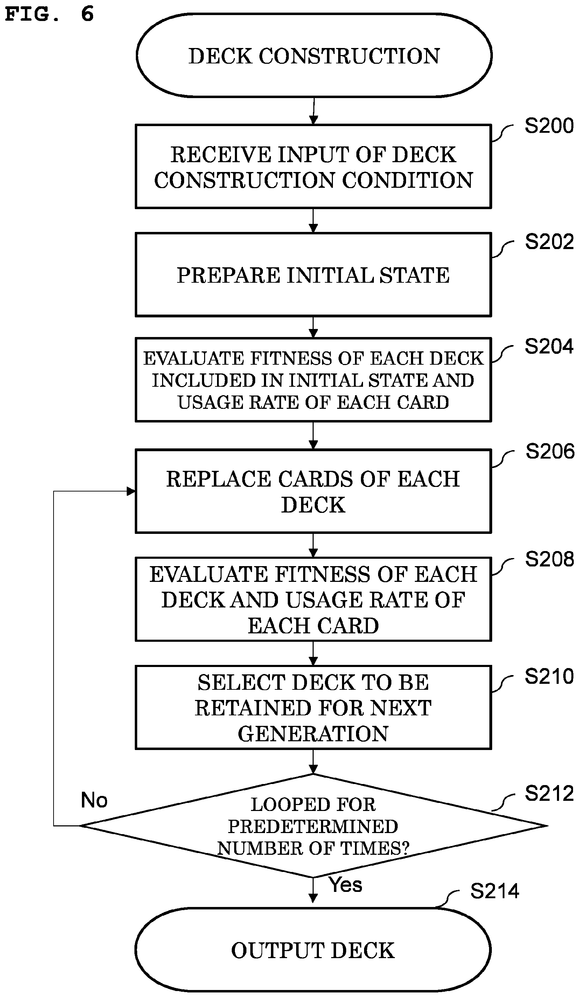

The processing of deck construction is executed based on the flowchart of FIG. 6. At first, the input reception unit 233 receives from the user (player or developer of card game A) the conditions that the construction target deck including the cards used in the card game must satisfy. The input reception unit 233 receives input of conditions that the user constructing the deck desires via a "card game A" deck construction condition designation page 400 illustrated in FIG. 4 as an example (S200 of FIG. 6). The deck construction condition designation page 400 is an example of a screen layout in a case where a web page is used, but the page is not limited to such a web page, and it may be of any form as long as the information of deck construction conditions may be appropriately received from a user.

The conditions that may be designated on the deck construction condition designation page 400 may be set freely by the user, and in consideration of the property of the algorithm described below, a system may be constructed that may freely designate conditions based on rules specific to the card game being the target, and not limited to universal conditions such as an assembly of cards that may be used for a deck or cards that must be assembled in a deck. For example, the card game A is composed of cards of two categories called a "monster" and a "spell" and of four colors (attributes) called "red", "blue", "green", and "black", whereas the respective number of cards of the monster and the spell or the composition ratio of colors are examples of conditions that may be designated, and in addition, conditions that may be represented by numerical values, such as an upper limit of a total value of attack forces of monsters or a number of characters of card names to be included in a deck, may also be designated as conditions.

In the deck construction condition designation page 400 illustrated in FIG. 4, in "number of decks to be created", it is shown that the user may create five decks simultaneously that satisfy the conditions set below. Further, in "color(s) of cards to be used", it is shown that the user desires a deck that includes "red" and "black" and includes no "blue" and "green" as attributes being included in the deck. Further, in "card(s) that must be included in the deck", it is shown that the user desires a deck that includes "monster small (red)", and in "card(s) that must not be included in deck", it is shown that the user desires a deck that does not include "monster medium (red)". A plurality of such conditions may be designated.

Further, in the deck construction condition designation page 400, in "number of monster cards to be included in deck", it is shown that the user desires four to seven monster cards to be included in a deck, and in "number of spell cards to be included in deck", it is shown that the user desires three to six spell cards to be included in a deck. Further, based on game rule No. 1 shown in FIG. 9, the total number of cards included in a deck is 10. Further, in "playstyle", the user may designate the tactics and playstyle of the deck being created, and in the present drawing, it shows that a "normal" playstyle, that is, victory of the deck being constructed (high winning percentage), is selected. Choices other than "normal" will be described later. The input reception unit 233 delivers the conditions received from the deck construction condition designation page 400 to the deck construction unit 234.

The deck construction unit 234 replaces the cards included in the construction target deck as described below based on the statistical information created by the statistical information creation unit 232, so as to satisfy the conditions received by the input reception unit 233. At first, the deck construction unit 234 performs preparation of an initial state (S202 of FIG. 6). As the preparation of the initial state, the deck construction unit 234 selects a prescribed number (10 cards according to the present example) from the card information storage unit 252, and creates a number of (5 according to the present example) initial state decks that have been designated in the "number of decks to be created" on the deck construction condition designation page 400. The decks being prepared in this stage may include randomly selected cards, as long as the decks do not break the conditions and rules (FIG. 9) designated in advance on the deck construction condition designation page 400.

The initial state deck being prepared is stored in the status storage unit 251, and information during construction accompanying advancement, such as replacing of cards, of deck construction until completion is stored in the status storage unit 251. The information stored in the status storage unit 251 may include the details of all decks at the current time (point of time when replacing of cards is performed) in the deck construction unit 234, the winning percentage or respective equivalent indicators (indicators other than the winning percentage) of each deck, and usage rate of each card (statistical information during construction) when each deck is used to perform a match with the test deck.

The deck construction unit 234 retains the prescribed number of decks in the status storage unit 251, and improves the decks by replacing cards of the respective decks, but prior to starting replacement of cards, it is preferable to evaluate a fitness of each deck in the initial state being prepared, or the usage rate of each card in the deck by performing matches between the respective decks and the test deck (S204 of FIG. 6). The fitness will be described below.

Specifically, at this timing, the match simulation unit 231 simulates matches between the respective decks in the initial state in the process of construction in the deck construction unit 234 during construction, and the statistical information creation unit 232 creates statistical information such as the usage rate during construction of each card based on the result of the matches during construction performed by the match simulation unit 231, based on which evaluation and replacement of subsequent cards may be performed. If evaluation is not performed at this timing, the replacement of cards is performed based on the first statistical information obtained according to the result of the match between the randomly selected deck and the test deck. This serves as statistical information such as the average usage rate of each card/set of cards included in various decks, and in deck construction, the statistical information is handled as numerical values denoting the ability of a card/set of cards or the relationship with other cards.

However, when replacing cards of a certain deck A which has appeared in the process of performing actual deck construction, it may be inconvenient to refer only to the usage rate being tabulated in advance using the random deck. As an actual example, if the cards of "card game A" is used, the "strengthen attack force (red)" is a card that strengthens its own monster having a red color, and the usage rate of the card is high when included in a deck based on statistics, but the card is meaningless when assembled in a deck that does not include a red monster.

If it is assumed that deck A does not include a red monster and that it includes the "strengthen attack force (red)", the usage rate of the "strengthen attack force (red)" in a case where a match is played between deck A and the test deck will be 0 %, and it can be recognized that it is wise to remove "strengthen attack force (red)" (regardless of the usage rate being tabulated in advance using a random deck) from deck A or to charge a red monster thereto. As described, when actually selecting a card to be removed/charged from/to the individual decks, a more appropriate selection is enabled by simultaneously referring to the usage rate when the deck being the target of card replacement is actually used, in addition to the average usage rate being tabulated based on random decks.

The deck construction unit 234 does not completely randomly select the card to be included in the deck and the card to be deleted from the deck during replacement of cards, but selects the cards based on statistical information read from the statistical information storage unit 253 (either one of or both the statistical information tabulated in advance using random decks and the statistical information during construction being tabulated in S204) (S206 of FIG. 6). Specifically, if "normal" in which a high winning percentage is desired is designated as the playstyle, cards having a high winning percentage based on the statistical information and the statistical information during construction are added to the deck with higher probability. Further, when selecting cards to be removed from the deck, similarly, the usage rate is referred to from the statistical information and the statistical information during construction, and cards having zero times of use or values close thereto are deleted with higher probability.

In this state, when replacing the cards, the deck is required not to break the designated conditions. The method therefore is not specifically designated, but by adopting a method of returning to the process of selecting cards and redoing the procedure therefrom if the deck after replacing cards breaks the conditions, the decks may correspond to any conditions. Depending on the cards being replaced, the deck may evolve to be weakened. In order to prevent such a case, it may be possible to have the original deck before replacing cards duplicated in the status storage unit 251. In that case, the total number of decks is temporarily increased.

As described above, taking the winning percentage of the deck or the usage rate of the cards as examples of fitness, the statistical information created by the statistical information creation unit 232 includes a winning percentage of a deck in which a certain card is present (first winning percentage), and/or a usage rate of a certain card when that card is present in a deck (first usage rate), and in this case, there may be a certain card and another card having a higher winning percentage and/or usage rate than that card. In this case, the deck construction unit 234 removes this certain card from the construction target deck with higher probability than the other card, or in contrast, adds the other card to the construction target deck with higher probability than the certain card. That is, the deck construction unit 234 refers to one of or both the first winning percentage and the first usage rate, adds the card showing a high winning percentage or usage rate to the deck with high probability, and removes the card showing a low winning percentage or usage rate from the deck with high probability.

As described, the deck construction unit 234 replaces the cards included in the construction target deck based on the statistical information created by the statistical information creation unit 232. In the present example, deck construction is performed with the playstyle set to "normal", that is, with the object set to realizing a high winning percentage, and thereby, a deck based on the conditions designated by the player of the card game, that is, a deck having a high winning percentage, may be constructed.

Further, in the deck construction unit 234, when replacing cards in S206, it may be possible to select one card present in a deck, and to add a card having a greater synergistic effect with the selected card to the deck with higher probability. Specifically, when the winning percentage of a deck or the usage rate of a card as examples of fitness is taken as an example, the statistical information created by the statistical information creation unit 232 includes a statistical information as illustrated in FIG. 11, such as c. average winning percentage of a deck in which a certain set of cards (A and B) is present (second winning percentage) or d. in a case where a certain set of cards (A and B) is present in a deck, the average times of use/usage rate of card A (second usage rate). Then, the deck construction unit 234 refers to one of or both the second winning percentage and the second usage rate, adds the card having a high winning percentage or usage rate to the deck with high probability, and removes the card having a low winning percentage or usage rate from the deck with high probability.

Thereby, if there is a combination of cards that exerts a synergistic effect by being assembled simultaneously in a deck, a deck including such a combination may be constructed. In general, it is considered that useful cards are increased within a deck as the deck construction advances and useless cards are decreased therefrom, but if cards to be replaced are completely randomly selected, it means that the probability that useful cards are eliminated from the deck and replaced with unnecessary cards become high. However, according to the present embodiment, the cards are replaced by a probability distribution according to the statistical information, such that the probability of deleting unnecessary cards and replacing the same with useful cards may be maintained high, and deck construction may be advanced efficiently.

In this state, it may be possible to introduce the idea of generic algorithm to the deck construction unit 234 and to intersect decks (operation of selecting two decks and using cards included therein to create a new deck). Even according to this case, the deck construction unit 234 may exert synergies efficiently using the probability distribution. Specifically, the deck construction unit 234 initially assembles a certain number of cards randomly from the cards included in two original decks (called a master), then selects one card included in a new deck, and thereafter, selects cards having a high synergy with the selected card from the cards included in the master up to a defined number of cards, and assembles the same in the deck being constructed, by which a new deck having succeeded the synergy included in the master may be created. As described, the deck construction unit 234 may perform deck construction using a genetic algorithm.

The deck construction unit 234 replaces the cards included in the construction target deck based on the statistical information, and then reevaluates the fitness of each deck at that point of time, the usage rage of each card when matches are executed in S204, if S204 has been executed, or the usage rate of each card when matches are executed in S102, if S204 has not been executed (S208 of FIG. 6).

In order to select a superior deck from among the decks being constructed, it is necessary to set up an indicator that indicates the superiority of the deck for each deck. In the context of deck construction, by using a winning percentage against a test deck prepared in advance, for example, deck construction may be performed with the object to create a strong deck. In that case, the target deck is actually used to perform automated matches with a plurality of test decks, and the winning percentages thereof are calculated as fitness. In this state, by tabulating the usage rate of the cards, there is no need to perform matches again when "replacing cards of each deck".

Here, it is possible to perform the deck construction with the object to build a strong deck by utilizing the winning percentage with respect to a normal test deck as the fitness of the deck, but the deck construction unit 234 may replace the cards included in the construction target deck using an indicator that differs from the winning percentage as the fitness. An indicator that differs from the winning percentage refers, for example, to a draw rate of a deck in which a certain card exists or to a discard rate causing the opponent to discard his/her card, and in this case, it may be possible to create a deck corresponding to special tactics of performing frequent behavior corresponding to the indicator being used. The indicator that may be designated may be set freely by the user, but from the property of algorithm, conditions are not limited to relatively universal conditions such as the draw rate or the discard rate, and conditions (indicators) based on rules that are specific to the target card game may also be designated freely. For example, the card game A includes two card categories, which are the "monster" and the "spell", and any indicator capable of being represented by a numerical value, such as "the number of times a spell is used during battle", may be set as an indicator that indicates the playstyle.

Such tactics and playstyles may be designated by the user as "playstyle" illustrated in FIG. 4 as an example, and in addition to "normal" having an object to realize a high winning percentage, a high draw tactics having an object to realize a high draw rate, a high discard tactics having an object to realize a high discard rate, or a tactics to select a behavior such that the corresponding indicator value becomes as high as possible, may be adopted. Accordingly, the conditions designated by the player differs according to the state and the object of the game, and deck construction corresponding to various conditions, tactics, and playstyle may be realized.

The fitness is generally an indicator for apprehending the ability of an individual to thrive as a creature in a general algorithm (GA) as a whole, and in the present specification, it is used as a score that indicates the level of correspondence of respective decks to the object (condition). Further, when introducing a genetic algorithm, in the information stored in the status storage unit 251, the current deck of the deck construction unit 234 is recognized as a newest generation deck in the GA, and in the case of a deck construction using an island model described below, it is recognized as an information of probability variation specific to each deck construction unit 234.

After the above-mentioned evaluation is performed, the deck construction unit 234 selects a deck to be retained for the subsequent step, which from the viewpoint of GA, selects a deck to be retained for the next generation (S210 of FIG. 6). When the deck intersect is performed, or when the original deck is duplicated upon replacing cards, the total number of decks stored in the status storage unit 251 at this point of time has been increased from the initial state, but if the procedure advances to the subsequent step in this state, the procedure of deck construction will be hindered significantly due to the exponential increase of processes, such that decks having a low fitness must be deleted periodically. In this process, a predetermined number of decks may simply be selected starting from those having higher fitness, or a selection algorithm similar to the method used in a normal GA may be used. As an actual example, in addition to a basic algorithm such as a roulette selection or a ranking selection, an evolutional algorithm, such as a Stochastic universal sampling, may also be used.

After selecting a deck, the deck construction unit 234 returns to S206, and repeatedly performs replacement of respective decks, evaluation such as fitness thereof, and selection of desks, for a predetermined number of times (S212 of FIG. 6). The predetermined number of times may be set based on a method in which a number of loops is predetermined (such as to 50 times or 100 times) prior to performing the deck construction, or may be based on a method of discontinuing the loop when the value of fitness has exceeded a certain value. When the deck construction unit 234 repeatedly performs the processing of S206 to S212 for a predetermined number of times, the information of the deck that has remained is transmitted to the output unit 235.

The output unit 235 outputs a list of cards included in the deck constructed by the deck construction unit 234 (S214 of FIG. 6). The output unit 235 may output the information, for example, on a Web page prepared in advance as a character string having listed the card names to the I/O interface 212 to be displayed on the display device, or may output the same to the network interface 213 where the information is transmitted to other computing devices such as the portable terminal 270.

The deck construction system 200 having the function unit described above may construct a deck that matches the conditions designated by the card game player by replacing cards included in the construction target deck based on the statistical information to satisfy the received conditions.

Further, the deck construction system 200 may introduce an algorithm called an island model in the GA and to create a plurality of decks characterized in different synergies at the same time. This process executes a plurality of GAs (wherein each GA is called an island) simultaneously, and to replace or intersect the individuals (which correspond to the decks according to the present embodiment) included in each island mutually at a predetermined periodic cycle to enhance the efficiency of the GA. In other words, the deck construction system 200 having introduced the island model includes one deck construction unit 234 in each island, and includes a plurality of deck construction units 234 as a whole.

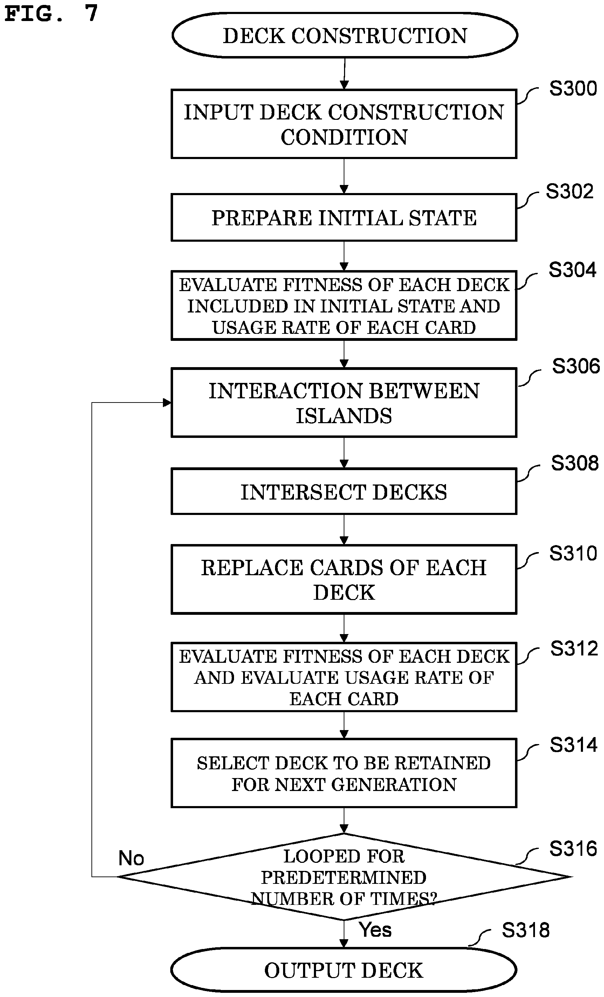

The processing of deck construction in each of the deck construction units 234 having introduced the island model is executed based on the flowchart illustrated in FIG. 7. In order to prevent overlap of description, the processes that are the same as S200 to S214 of FIG. 6 will only be described simply. At first, the input reception unit 233 receives conditions to be satisfied by the construction target deck including the cards used in the card game from the user via the "card game A" deck construction condition designation page 400 illustrated in FIG. 4 (S300 of FIG. 7).

Next, each deck construction unit 234 selects a prescribed number from the card information storage unit 252, creates the number of initial state decks that has been designated by the "number of decks to be created" on the deck construction condition designation page 400, and performs an initial state preparation (S302 of FIG. 7).

Each deck construction unit 234 retains a predetermined number of decks in the respective status storage unit 251, and performs replacement of cards for each of the decks to improve the decks, wherein prior to starting the replacement of cards, it is preferable to evaluate the fitness of each deck in the prepared initial state or the usage rate of each card in the deck by executing a match between the respective decks and the test deck (S304 of FIG. 7).

Next, the respective deck construction units 234 confirm the interaction between islands (S306 of FIG. 7). Specifically, the deck construction unit 234 checks the details of the deck during construction or the distribution of synergy of the deck included in each island for each of the islands of the island model, and adjusts the probability such that details of the card or set of cards that is dominant in a certain island will not easily appear in other islands.

After adjusting the probability, each of the deck construction units 234 carries out an operation to intersect, or select two decks, among the decks, and uses cards included therein to create a new deck (S308 of FIG. 7). Further, the deck construction unit 234 stores progress information of two or more islands simultaneously in the status storage unit 251, and refers to the information sequentially, so as to perform exchange processing of a portion of the cards included in the deck between islands, or to exchange the decks (individuals). What is meant by adjusting the probability is that when replacing or intersecting cards, the system performs operation to lower the probability of having one of or both the cards included in the set of cards that is desired to be limited from being assembled into the deck, or to raise the probability thereof to be deleted from the deck. The deck construction unit 234 performs such adjustment of probability to enable decks having different synergies to be constructed in the respective islands.

Next, the respective deck construction units 234 execute replacement of cards of the respective decks (S310 of FIG. 7). During card replacement, each of the deck construction units 234 performs the selection based on the statistical information read from the statistical information storage unit 253. Further, similar to S206, each of the deck construction units 234 selects one card that exists in the deck, and adds cards having higher synergistic effects with the selected card with higher probability.

In each of the deck construction units 234, after replacing the cards included in a construction target deck based on the statistical information, the fitness or usage rate of each deck at that point of time is reevaluated (S312 of FIG. 7). After evaluation, each of the deck construction units 234 selects a deck to be retained for the next generation (S314 of FIG. 7).

After selecting a deck, the deck construction unit 234 returns to S306, and after confirming the interaction between islands, performs the intersection processing of decks, replacement of respective decks, evaluation of fitness, and selection of decks repeatedly for a predetermined number of times (S316 of FIG. 7). After repeating S306 to S316 for a predetermined number of times, the deck construction unit 234 transmits the information of the deck that has finally remained to the output unit 235. Then, the output unit 235 outputs a list of cards included in the deck constructed by the deck construction unit 234 (S318 of FIG. 7).

As described above, the deck construction unit 234 having introduced the island model replaces cards included in the construction target deck simultaneously based on the statistical information created by the statistical information creation unit 232 and details of the deck during construction in the deck construction unit 234, and performs an exchange processing, or intersect processing based on genetic algorithm, of a portion of the cards included in the deck during construction in each of the deck construction units 234 at predetermined periodic cycles. Thereby, the deck construction system 200 may construct a plurality of decks having meaningful differences of deck concepts. Predetermined periodic cycles may mean performing processes either per each loop among the loops of FIG. 7 or per a number of loops, which may be determined arbitrarily.

The above-described technique relates to a deck construction method that performs deck construction of a card game, including a step of simulating a match between a deck including a card used in the card game and a test deck determined in advance, a step of creating a statistical information of a card based on a result of the match being simulated, a step of receiving a condition to be satisfied by a construction target deck including the card used in the card game, and a step of replacing a card included in the construction target deck based on the statistical information being created so as to satisfy the condition being received, wherein the method is executed by a computer. Based on the above, a deck construction method that may perform deck construction according to designated conditions, to thereby assist the deck construction of players or assist adjustment of game balance by developers may be provided.

Further, the above-mentioned deck construction method may be provided as a program for allowing a computer to function as a system including a match simulation function, a statistical information creation function, an input reception function, and a deck construction function. The program may be constructed to be used by downloading from a server storing the program, or may be stored in a computer-readable storage medium and provided by the storage medium.

The present invention is not limited to the exemplified embodiments, and may be implemented by a configuration that is within a range not deviating from the contents described in each of the claims. That is, the present invention, which is mainly illustrated and described with respect to a specific embodiment, may be modified by those with ordinary skill in the field of art regarding volume and other details illustrated in the embodiments described above, without deviating from the technical concepts and objects of the present invention.

### [Reference Signs List]

200 deck construction system
210 deck construction device
231 match simulation unit
232 statistical information creation unit
233 input reception unit
234 deck construction unit
235 output unit
251 status storage unit
252 card information storage unit
253 statistical information storage unit

## Claims

1. A deck construction system for performing a deck construction of a card game, the deck construction system comprising:
a match simulation unit configured to simulate a match between a deck including a card used in the card game and a test deck determined in advance;
a statistical information creation unit configured to create a statistical information of a card based on a result of the match performed by the match simulation unit;
an input reception unit configured to receive a condition to be satisfied by a construction target deck including the card used in the card game; and
a deck construction unit configured to replace a card included in the construction target deck based on the statistical information created by the statistical information creation unit so as to satisfy the condition received by the input reception unit.

2. The deck construction system according to claim 1,
wherein the statistical information created by the statistical information creation unit includes a first winning percentage of a deck in which a certain card is present and/or a first usage rate of a certain card in a case where the certain card is present in a deck,
wherein, in a case where there is a first card, and a second card having the first winning percentage and/or the first usage rate that is higher than the first card,
the deck construction unit is configured to
remove the first card with a higher probability than the second card from the construction target deck, and
add the second card with a higher probability than the first card to the construction target deck.

3. The deck construction system according to claim 1 or claim 2,
wherein the statistical information created by the statistical information creation unit includes a second winning percentage of a deck in which a certain set of cards is present and/or a second usage rate of each card of the set of cards in a case where a certain set of cards is present in a deck, and
wherein, in a case where there is a third card, and a fourth card having the second winning percentage and/or the second usage rate that is higher than the third card,
the deck construction unit is configured to
remove the third card with a higher probability than the fourth card from the construction target deck, and
add the fourth card with a higher probability than the third card to the construction target deck.

4. The deck construction system according to any one of claims 1 to 3,
wherein the match simulation unit performs simulation of a match during construction between a deck in the process of construction in the deck construction unit and the test deck,
wherein the statistical information creation unit creates a statistical information during construction of a card based on a result of the match during construction performed in the match simulation unit, and
the deck construction unit replaces the card included in the construction target deck based on the statistical information during construction created by the statistical information creation unit.

5. The deck construction system according to any one of claims 1 to 4, wherein the deck construction unit performs deck construction using a genetic algorithm.

6. The deck construction system according to claim 5, further comprising:
a plurality of the deck construction units,
wherein each of the deck construction units includes replacing a card included in the construction target deck simultaneously based on the statistical information created by the statistical information creation unit and details of a deck in the process of construction in the deck construction unit, and
wherein a portion of cards included in the deck in the process of construction in each of the deck construction units is subjected to replacement processing in a predetermined cycle or subjected to intersect processing based on the genetic algorithm.

7. The deck construction system according to claim 5 or claim 6,
wherein the statistical information created by the statistical information creation unit includes an indicator that differs from a winning percentage, and
wherein the deck construction unit is configured to replace a card included in the construction target deck using a fitness other than the winning percentage serving as fitness in the genetic algorithm.

8. A deck construction method for performing deck construction of a card game executed by a computer, the deck construction method comprising:
a step of simulating a match between a deck including a card used in the card game and a test deck determined in advance;
a step of creating a statistical information of a card based on a result of the match being simulated;
a step of receiving a condition to be satisfied by a construction target deck including the card used in the card game; and
a step of replacing a card included in the construction target deck based on the statistical information being created so as to satisfy the condition being received.

9. A deck construction program for having a computer realize a processing for performing deck construction of a card game, the deck construction program comprising:
having a computer realize
a match simulation function of simulating a match between a deck including a card used in the card game and a test deck determined in advance;
a statistical information creation function of creating a statistical information of a card based on a result of the match being simulated by the match simulation function;
an input reception function of receiving a condition to be satisfied by a construction target deck including the card used in the card game; and
a deck construction function of replacing a card included in the construction target deck based on the statistical information being created by the statistical information creation function so as to satisfy the condition being received by the input reception function.
